# EUROPEAN PATENT SPECIFICATION

(11) **EP 3 914 489 B1**
(45) Date of publication and mention of the grant of the patent: **08.03.2023**
(21) Application number: 20702196.5
(22) Date of filing: 17.01.2020
(51) Int. Cl.: B60T 13/68, B60T 13/66

(54) **BRAKE CONTROL ASSEMBLY WITH MANUAL AND ELECTRICAL ACTUATION**
BREMSSTEUERANORDNUNG MIT MANUELLER UND ELEKTRISCHER BETÄTIGUNG
ENSEMBLE DE COMMANDE DE FREIN À ACTIONNEMENT MANUEL ET ÉLECTRIQUE

(30) Priority: 22.01.2019 GB 201900847
(43) Date of publication of application: 01.12.2021
(73) Proprietor: Caterpillar SARL, 1208 Geneva (CH)
(72) Inventor: JOHNSON, Steven, E., Metamora, Illinois 61548 (US); ADEEB, Adam, Seaham SR7 ODB (GB)
(74) Representative: Novagraaf Group
(86) International application number: PCT/EP2020/025018
(87) International publication number: WO 2020/151916

(56) References cited:
- EP-A2- 1 201 523
- US-A1- 2005 173 976
- US-A1- 2011 300 992

## Description

### Technical Field

This invention relates to vehicular braking systems, including in particular braking systems in road vehicles, in which the brakes may be applied both by the driver and by an electrical controller.

### Background

It is known to control the service (friction) brakes of a road vehicle by means of an electrical controller, so that the service brakes may be applied both by the driver (typically via a foot brake pedal or treadle) and by the controller. The controller may act responsive to driver input or independently of the driver. In hydraulic systems such functionality is generally referred to as electrohydraulic braking.

The automatic brake control function may be initiated by the controller independently of the driver, for example, to apply the service brakes to prevent overspeed of the engine when the vehicle is travelling downhill with no input at the throttle, a concept sometimes referred to as Automatic Retarding Control. Alternatively, braking may be initiated by the controller responsive to driver input via a user interface, for example, to apply the service brakes while the vehicle is parked for a brief period, as taught by US 2015 0323070 A1.

Such systems are often complex and expensive and require duplicated components to actuate split brake circuits.

GB2563669 (A) discloses a hydraulic braking system comprising first and second brake valves acting upon first and second brake circuits. The first and second brake valves are arranged in a parallel configuration and are operable together by a foot pedal and individually by pilot pressure from respective, first and second control valves responsive to first and second control signals from an engine control unit.

US 2011/0300992 A1 discloses a method for operating a brake system for a work machine, and a brake system of a work machine, involving moving the brake actuator automatically to its fully engaged position, when the accelerator actuator is released during activated state of brake system.

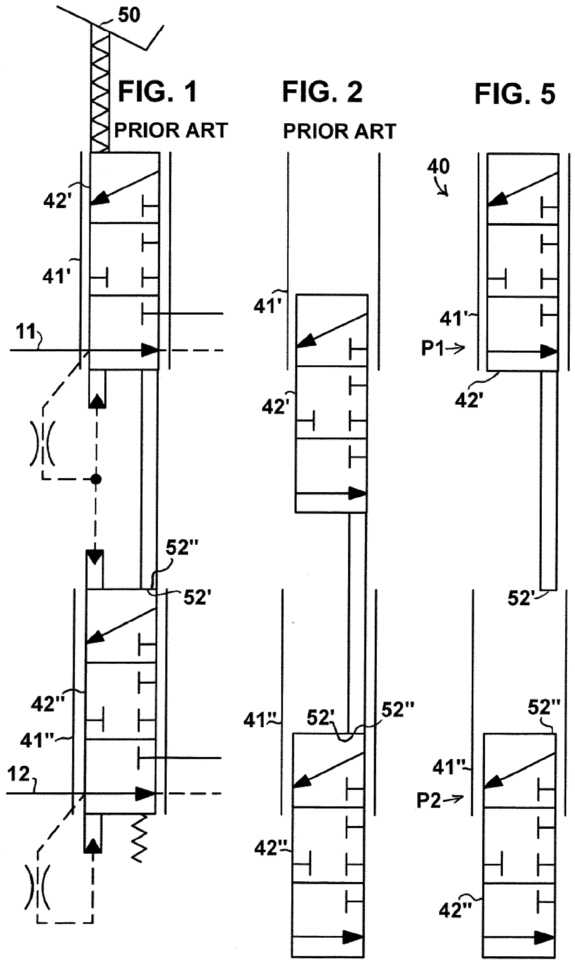

Figs. 1 and 2 show another known valve assembly comprising coaxially aligned, first and second valve elements 42', 42" movably received in first and second valve housings 41', 41" to control respective, first and second brake circuits 11, 12 of a vehicle. The first valve element 42' includes a first abutment surface 52', and the second valve element 42" includes a second abutment surface 52". The first and second valve elements are movable from a first position as shown in Fig. 1 to a second position as shown in Fig. 2 by a foot pedal 50 acting on the first valve element 42'. The first valve element 42' is configured to move the second valve element 42" from the first position to the second position by abutment of the first abutment surface 52' against the second abutment surface 52" as the first valve element 42' moves from the first position to the second position.

### Summary

In a first aspect, the present invention provides an apparatus for controlling a braking system in a vehicle. The braking system includes first and second pressurised fluid brake circuits acting respectively on first and second brakes of the vehicle, and a controller for generating an electrical control signal.

The apparatus includes a valve assembly, a brake control, and an actuator assembly.

The valve assembly includes first and second valve elements which may be configured generally as shown in the prior art valve assembly of Figs. 1 and 2.

The first valve element is movably received in a first valve housing and cooperates with the first valve housing to control a flow of pressurised fluid in the first brake circuit. The second valve element is movably received in a second valve housing and cooperates with the second valve housing to control a flow of pressurised fluid in the second brake circuit.

The brake control is operatively associated with the first and second valve elements and operable by a user to move both of the first and second valve elements, relative to the first and second valve housings, from a first position to a second position.

In the first position, the first and second valve elements are configured in use to cooperate with the first and second valve housings to relieve fluid pressure to release the first and second brakes.

In the second position, the first and second valve elements are configured in use to cooperate with the first and second valve housings to apply fluid pressure to apply the first and second brakes.

The actuator assembly is operable by the electrical control signal to move the first valve element from the first position to the second position.

The first valve element includes a first abutment surface, and the second valve element includes a second abutment surface.

The first valve element is configured to move the second valve element from the first position to the second position by abutment of the first abutment surface against the second abutment surface as the first valve element moves from the first position to the second position.

In embodiments, the first and second valve housings may be arranged in series relation, and optionally in coaxial alignment, in an axial direction of movement of the first and second valve elements between the first and second positions.

In embodiments, the brake control may include a foot pedal acting on the first valve element.

The first actuator and an actuator control valve are configured so that the actuator control valve is operable in use by the electrical control signal to apply fluid pressure to the first actuator, the first actuator being operable by said fluid pressure applied by the actuator control valve to move the first valve element from the first position to the second position.

In embodiments, the valve assembly may include a second actuator operable by fluid pressure to urge the first valve element away from the second position towards the first position. The valve assembly may further include a third actuator operable by fluid pressure to urge the second valve element away from the second position towards the first position, and a fourth actuator operable by fluid pressure to urge the second valve element away from the first position towards the second position.

The apparatus further includes a mount, a plurality of fluid inlet and outlet ports, and an electrical connector. The valve assembly is arranged in fluid communication with the fluid inlet and outlet ports, and the electrical connector is arranged to communicate the electrical control signal to the actuator assembly. The valve assembly, the actuator assembly, the brake control, the fluid inlet and outlet ports, the electrical connector, and the mount are connected together as a unitary assembly; the mount being fixable to the vehicle to support the brake control in a use position.

The features of the abovementioned embodiments may be combined together in any desired combination.

In another, related aspect, the invention provides a method of controlling a braking system in a vehicle, wherein an apparatus is arranged and configured as explained above.

### Brief Description of the Drawings

Further features and advantages will become evident from the illustrative embodiment which will now be described, purely by way of example and without limitation to the scope of the claims, and with reference to the accompanying drawings, in which:
Fig. 1 shows a prior art valve assembly with first and second valve elements 42', 42" in a first position;
Fig. 2 shows the first and second valve elements 42', 42" of the prior art valve assembly in a second position;
Fig. 3 shows a vehicle having a braking system including a first brake control apparatus in accordance with an embodiment of the invention,
Fig. 4 is an enlarged view of the first brake control apparatus as shown in Fig. 3; and
Fig. 5 shows the first and second valve elements of the first brake control apparatus wherein the first valve element is in a first position P1 and the second valve element is in a second position P2.

Reference numerals appearing in more than one of the figures indicate the same or corresponding parts in each of them.

### Detailed Description

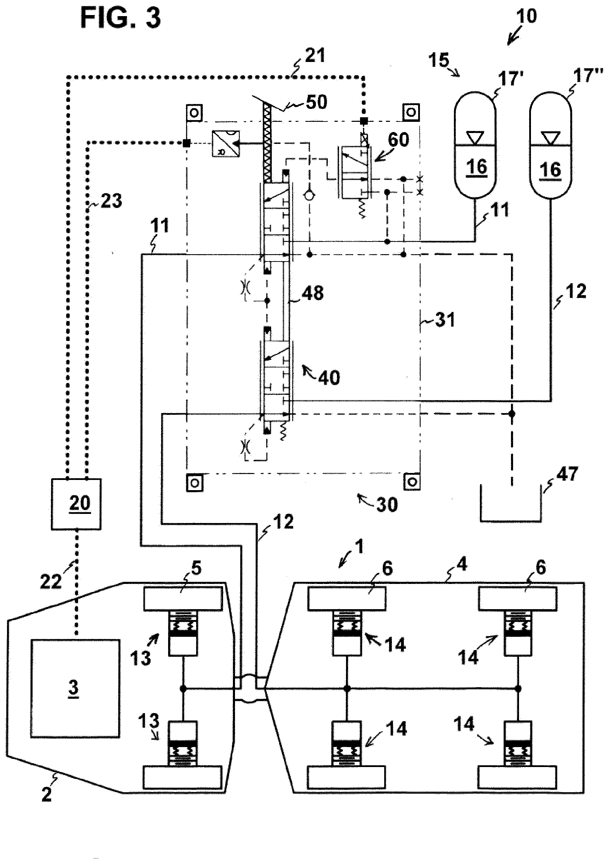

Referring to Fig. 3 a road vehicle 1 may be configured for example as an articulated dump truck, including a tractor unit 2 driven by an engine 3, and connected via a coupling to a trailer 4 having a tipping body.

The vehicle 1 includes a braking system 10 including first and second pressurised fluid brake circuits 11, 12 which act respectively on first and second brakes 13, 14 of the vehicle, and which are supplied from a source 15 of pressurised fluid 16. The source 15 may comprise separate, first and second tanks or accumulators 17', 17" as shown, each storing and supplying pressurised fluid 16 to a different respective one of the first and second brake circuits 11, 12. The pressurised fluid 16 may be a hydraulic fluid (which is to say, a substantially incompressible fluid) as shown in the illustrated embodiment, and may be maintained under pressure by a hydraulic pump or by any other suitable arrangement.

In this specification, a brake circuit means an arrangement for distributing fluid pressure to the respective components of a braking system, and is not intended to imply (or to preclude) a circulating flow of pressurised fluid. Similarly, those skilled in the art will understand that the terms "flow control" and "flow of pressurised fluid" should be construed to include controlling the application of fluid pressure in which there may be little or no flow of the pressurised fluid, for example, by means of directional control valves as further described below.

In the illustrated embodiment, the first brakes 13 are friction brakes acting on the road wheels 5 of the tractor unit, while the second brakes 14 are friction brakes acting on the road wheels 6 of the trailer. Other split brake circuit configurations are possible, whereby the first and second brake circuits may act on different respective ones or groups of the vehicle road wheel brakes.

The braking system 10 further includes a controller 20 for generating an electrical control signal 21 to control the vehicle brakes, either responsive to driver input or independently of the driver. The controller may comprise software stored in memory and running on a processor or any other suitable computer or electronic control unit as known in the art, and may be integrated into an engine control unit or other electronic system of the vehicle.

The controller 20 may receive input signals 22 to sense a condition of the vehicle, for example, a speed of the engine 3 and/or other operational parameters. The controller may also receive input signals 23 from a position sensor 24 arranged to sense a position (for example, an angular position) of the foot brake pedal or other brake control which indicates the input command of the operator.

Further input signals (not shown) may be received from another user interface. The controller 20 may provide the control signal 21 responsive to any, both or all of the input signals according to the desired control logic. The input signals may be combined by the controller in accordance with any suitable algorithm or logical function to determine whether to generate or modulate the control signal 21.

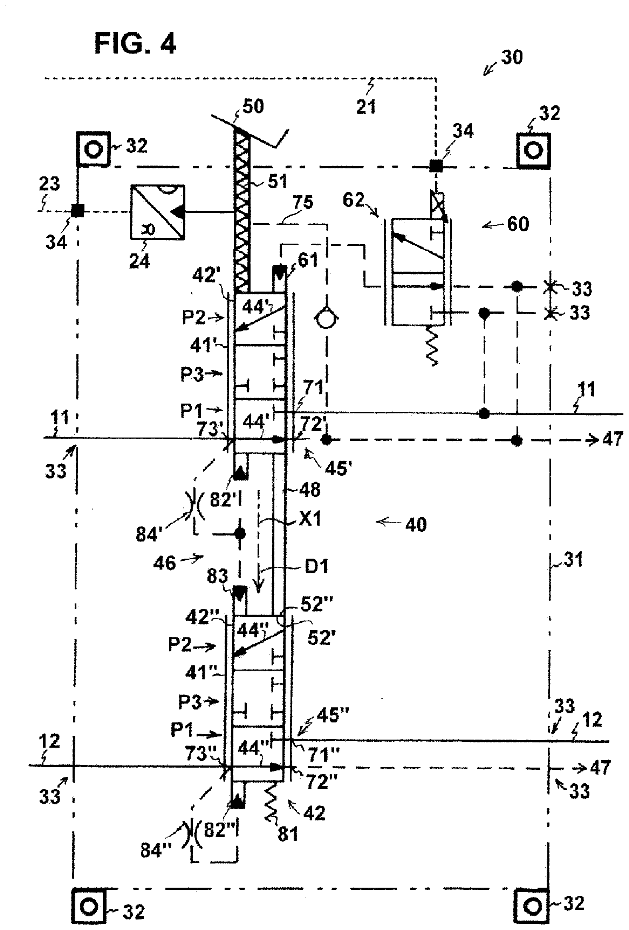

Referring also to Fig. 4, the braking system 10 is controlled by an apparatus 30 including a valve assembly 40, a brake control 50, and an actuator assembly 60.

The valve assembly 40 includes first and second valve elements 42', 42". The first valve element 42' is movably received in a first valve housing 41', while the second valve element 42" is movably received in a second valve housing 41". The first and second valve housings 41', 41" are arranged in fixed relation to each other, and may be configured as an assembly of separate parts.

The first valve housing 41' defines a first group of ports 45' in fluid communication with the first brake circuit 11 and with a first group of flowpaths 44' of the first valve element 42'.

The second valve housing 41" defines a second group of ports 45" in fluid communication with the second brake circuit 12 and with a second group of flowpaths 44" of the second valve element 42".

Each valve element 42', 42" may be slidable as shown in the respective valve housing along a length axis X1 of the respective valve element between its first and second positions P1, P2.

The valve elements 42', 42" and valve housings 41', 41" may be coaxially aligned in series relation (i.e. one after the other), as shown, in which case the valve elements may be slidable as shown along their common length axis X1 between their first and second positions P1, P2.

The first valve element 42' cooperates with the first valve housing 41' by selective communication of the first flowpaths 44' with the first ports 45' to control a flow of pressurised fluid 16 in the first brake circuit 11 acting on the first brakes 13 of the vehicle.

The second valve element 42" cooperates with the second valve housing 41" by selective communication of the second flowpaths 44" with the second ports 45" to control a flow of pressurised fluid 16 in the second brake circuit 12 acting on the second brakes 14 of the vehicle 1.

In the illustrated example, each of the first and second valve elements defines with its respective valve housing a 3-position, 2-way directional control valve with a sliding spool and proportional flow characteristics, wherein the first position P1 and second position P2 of each of the first and second flow control portions 43', 43" are separated by a momentary, transitional or intermediate position P3 which is also illustrated for clarity.

Each of the first and second groups of ports 45', 45" includes: a respective pressure port 71', 71" which receives a supply of pressurised fluid 16 from the respective, first or second accumulator 17', 17"; a respective drain port 72', 72" which communicates with the tank 47; and a respective outlet port 73', 73" which communicates with the piston or other actuator mechanism of the respective first or second brakes 13, 14.

The brake control 50 is arranged to act on the first valve element 42' which acts in turn on the second valve element 42". In this way, the brake control is operatively associated with both of the first and second valve elements 42', 42" so that it is operable by a user or driver of the vehicle 1 to move both of the first and second valve elements 42', 42" together and simultaneously, relative to the first and second valve housings 41', 41", from the first position P1 to the second position P2.

The brake control 50 may include a foot pedal, as illustrated, and may be operatively associated with the valve elements either indirectly or directly, optionally mechanically, e.g. by a direct mechanical connection as shown. In this specification, a pedal is synonymous with a treadle.

As illustrated, the brake control 50 may act on the first valve element 42' via a spring assembly 51 comprising one or more springs or other resilient bias element which transmits a force, e.g. a compressive force from the brake control 50 to urge the first valve element 42' from the first position P1 to the second position P2. The spring 51 or other resilient bias element may be adjustable to adjust the applied force and permits the first and second valve elements 42', 42" to move back from the second position P2 towards the first position P1 against the force applied by the operator in the event that a relatively higher force is applied by second and third, load sensing actuators 82', 82" (responsive to higher pressure in the brake circuits 11 or 12), which may be provided as further discussed below. A drain line 75 may be provided to vent any hydraulic fluid leaking into the housing of the spring assembly back to tank as known in the art.

The brake control 50 and the first and second valve elements 42', 42" may be biased by a restoring force to return from their actuated position or second position P2 to their rest position, which may be the first position P1 of the first and second valve elements 42', 42". For example, the spring 51 may return the brake control 50 to its first, rest position P1. Another resilient bias element such as a spring 81 may be provided to return the second valve element 42" to its first, rest position P1, which may also return the first valve element 42' and the brake control 50 to their rest position or first position P1 by abutment of the second abutment surface 52" against the first abutment surface 52' as further explained below.

In the first position P1, the first and second valve elements 42', 42" cooperate with the first and second valve housings 41', 41" to relieve fluid pressure to release the first and second brakes 13, 14 by connecting each of the outlet ports 73', 73" to a respective drain port 72', 72".

In the second position P2, the first and second valve elements 42', 42" cooperate with the first and second valve housings 41', 41" to apply fluid pressure to apply the first and second brakes 13, 14 by connecting each of the outlet ports 73', 73" to a respective one of the pressure ports 71', 71".

The first valve element 42', includes a first abutment surface 52', and the second valve element 42" includes a second abutment surface 52".

The first valve element 42' is configured to move the second valve element 42" from the first position P1 to the second position P2 by abutment of the first abutment surface 52' against the second abutment surface 52" as the first valve element 42' moves from the first position P1 to the second position P2. The movement is reversible so that the second valve element 42" can urge the first valve element 42' back from the second position P2 to the first position P1 by abutment of the respective abutment surfaces 52", 52'.

Fig. 4 shows that the first and second valve elements may be free to move apart responsive to force applied by the load sensing actuators 82', 82", 83 which may be provided as further discussed below. As illustrated, the first valve element 42' may return to the first, rest position P1 responsive to force applied via load sensing actuator 82' by fluid pressure in the first braking circuit 11, while the second valve element 42" is urged to remain in the second position P2 responsive to force applied via load sensing actuator 83 by fluid pressure in the first braking circuit 11 in opposition to a relatively lesser restoring force applied via load sensing actuator 82" responsive to fluid pressure in the second braking circuit 12.

The actuator assembly 60 is operable by the electrical control signal 21 to move the first valve element 42' from the first position P1 to the second position P2. Thus, it will be understood that the brake control 50 and the actuator assembly 60 provide alternative and mutually independent operation of the first and second valve elements 42' 42", equivalent to a logical "OR" function.

The brake control 50 may override the operation of the actuator assembly 60. For example, the brake control 50 may be depressed to increase braking force relative to the force applied by the actuator assembly 60, and/or the controller 20 may terminate, interrupt or modify the control signal 21 and hence the operation of the actuator assembly 60 responsive to signals 23 from the position sensor 24 indicating movements of the brake control 50.

As illustrated, the actuator assembly 60 may include a first actuator 61 and an actuator control valve 62. The actuator control valve 62 is operable by the electrical control signal 21 to apply fluid pressure to the first actuator 61. The first actuator 61 is operable by the fluid pressure applied by the actuator control valve 62 to move the first valve element 42' from the first position P1 to the second position P2.

The first and second valve elements 42', 42" have proportional flow characteristics, and the actuator control valve is proportionally controlled by the signal 21 to vary the pilot fluid pressure applied to the first actuator 61. The pilot fluid pressure applied to the first actuator 61 is thus proportional to the magnitude or other variable parameter of the signal 21, so that the first actuator 61 is operable to urge the first valve element from the first position P1 towards the second position P2 with a force proportional to the variable parameter of the signal 21.

The first and second valve elements 42', 42" thus apply fluid pressure to the respective first and second brakes 13, 14 proportional to the applied pressure which in turn is proportional to the variable parameter of the signal 21 and the variable pressure applied to the brake control 50 by the user.

A load sensing function may be provided during operation of the brakes by the control signal 21 as well as the brake control 50 by means of second and third actuators 82', 82" which are operable by fluid pressure to urge the respective, first and second valve elements 42', 42" away from the second position P2 towards the first position P1.

The second actuator 82' acting on the first valve element 42' may be operable by fluid pressure from the first brake circuit 11 while the third actuator 82" acting on the second valve element 42" is operable by fluid pressure from the second brake circuit 12.

In addition, the actuator control valve 62 may be operable to apply fluid pressure from the first brake circuit 11 to the first actuator 61, so that the first actuator 61 and the second, load sensing actuator 82' act in opposition on the first valve element 42' responsive to pressure from opposite sides of the same brake circuit 11 across the first flowpaths 44' of the first valve element 42', providing a balanced, load sensing function during operation of the braking system by the control signal 21.

That is to say, the first actuator 61 is supplied with pressure via the actuator control valve from the supply side of the circuit, while the second actuator 82' is supplied with pressure from the brake side of the circuit.

By the supply side of the circuit is meant pressure from the pressurised fluid source at the pressure of the pressurised fluid source (which may be reduced to a selectively variable pressure by the actuator control valve 62 before it is applied to the first actuator 61), and not via the respective valve element.

By the brake side of the circuit is meant pressure from the pressurised fluid source via the respective valve element, from that part of the respective brake circuit that is arranged between the respective brakes and the respective valve element, hence at the same pressure that is applied to and present at the respective brakes responsive to operation of the respective, first or second valve element 42', 42".

As shown, the second and third actuators 82', 82" may both be supplied with pressurised fluid from the brake side of the respective, first or second brake circuit 11, 12.

Equal fluid pressure may be present on the supply side of the first and second brake circuits 11, 12.

The load sensing function of the second and third actuators 82', 82"may provide smoother brake actuation and tactile feedback to the user via the brake control 50.

A fourth actuator 83 may be arranged to apply a force in the same direction as the first actuator 61 and in opposition to the third actuator 82" to urge the second valve element 42" away from the first position P1 and towards the second position P2. The fourth actuator 83 may be operable by fluid pressure from the brake side of the second brake circuit 12.

In combination, the second, third and fourth actuators provide a load sensing function as known in the art.

Each of the second, third and fourth actuators may be supplied with pressurised fluid 16 from the brake side of the respective circuit via a respective orifice 84', 84", which may be internal to the valve.

The second and fourth actuators 82', 83 acting in opposite directions respectively against the first and second valve elements 42', 42" may be supplied with pressurised fluid from the brake side of the first brake circuit 11 via a common orifice 84'.

The apparatus 30 may include a mount 31 which is fixable to the vehicle 1 (for example, via lugs or flanges 32) to support the brake control 50 in a use position as shown.

The apparatus 30 may further include a plurality of fluid inlet and outlet ports 33 which may comprise, or may be arranged in fluid communication with, the respective first and second groups of ports 45', 45" of the at least one valve housing 41. For example, ports 71', 71", 72', 72", 73', 73" may be connected to respective inlet and outlet ports 33 which are grouped together in a convenient connector block, or may themselves form respective ones of the inlet and outlet ports 33.

The apparatus 30 may further include an electrical connector 34 which is arranged to communicate the electrical control signal 21 to the actuator assembly 60 and optionally also to communicate input signals 23 from the sensor 24 (if provided).

The valve assembly 40, the actuator assembly 60, the brake control 50, the fluid inlet and outlet ports 33, the electrical connector 34, and the mount 31 are connected together as a unitary assembly which can be installed in the vehicle 1 to support the brake control 50 in its use position. Optionally, the mount 31 may comprise a housing which contains the valve assembly 40 and actuator assembly 60 and the fluid conduits which connect the components together.

In this and other embodiments, the controller may be configured to generate the electrical control signal responsive to a sensed condition of the vehicle (e.g. vehicle road speed, gear, engine speed, and/or throttle input) to apply the first and second brakes to limit a speed of the engine driving the vehicle in motion. Thus, the novel apparatus may be used to implement Automatic Retarding Control. Alternatively, as known in the art, braking may be initiated by the controller responsive to driver input via a user interface (not shown) other than the brake control 50, for example, to apply the service brakes while the vehicle is parked for a brief period.

In summary, a vehicular braking system 10 is controlled by a valve assembly 40 including first and second valve elements 42', 42" movable in first and second valve housings 41', 41" from a first position P1 to a second position P2 to apply fluid pressure respectively to the respective brake sides of first and second brake circuits 11, 12 of the vehicle 1. The first valve element 42' is movable from the first position P1 to the second position P2 by user input via a brake control 50, e.g. a foot brake pedal, and by an actuator assembly 60 responsive to an electrical control signal 21 from an electronic controller. An abutment surface 52' of the first valve element 42' abuts a corresponding abutment surface 52" of the second valve element 42" to move the second valve element 42" from the first position to the second position as the first valve element 42' moves from the first position to the second position.

Further in accordance with a method of controlling a braking system in a vehicle, a valve assembly, a brake control, and an actuator assembly are provided, with the brake control being arranged, and the first and second valve elements configured as generally described above. In particular, the actuator assembly is arranged to be operable by the electrical control signal to move the first valve element from the first position to the second position, and the first valve element is arranged to abut the second valve element to move the second valve element from the first position to the second position as the first valve element moves from the first position to the second position.

In alternative embodiments, the novel apparatus may be used to control the braking system of other vehicles, including in particular road vehicles.

The apparatus may be configured for use in hydraulic or pneumatic braking systems.

The pressurised fluid may be provided from dual accumulators or tanks (each supplying a respective one of the circuits) as shown, or alternatively from a single accumulator or tank supplying both circuits, or from any other suitable source.

The actuator assembly could be provided in a single, electrical actuator instead of using pilot pressure.

### Industrial Applicability

The novel apparatus provides simple and cost effective braking control in vehicles equipped with split (i.e. dual first and second) brake circuits and an electrical controller for generating a brake actuation signal, wherein the component count is reduced compared with prior art arrangements, reducing cost and complexity.

By arranging the components of the apparatus as a unitary assembly including a mount, the dual manual and electrical control functionality may easily be installed together with the brake control (typically a foot brake pedal) as a single unit to support the brake control in its use position.

By arranging the first and second valve housings in series relation in the axial direction of movement between the first and second positions, and particularly where the first and second valve housings are aligned coaxially, a simple, compact and mechanically reliable assembly is obtained which can be installed into an aperture in the vehicle body along the direction of the axis of movement, simplifying installation and maintenance where space is limited.

The valve assembly 40 may include second, third and fourth actuators 82', 82", 83 to provide a load sensing function when the brakes are operated either by the brake control 50 or by the actuator assembly 60, and to provide a feedback reaction to the operator via the brake pedal or other brake control 50.

In the claims, reference numerals and characters are provided in parentheses, purely for ease of reference, and should not be construed as limiting features.

## Claims

1. An apparatus (30) for controlling a braking system (10) in a vehicle (1), the braking system (10) including first and second pressurised fluid brake circuits (11, 12) acting respectively on first and second brakes (13, 14) of the vehicle, and a controller (20) for generating an electrical control signal (21);
the apparatus including:
a valve assembly (40),
a brake control (50), and
an actuator assembly (60);
the valve assembly (40) including:
a first valve element (42') movably received in a first valve housing (41'), the first valve element (42') cooperating in use with the first valve housing (41') to control a flow of pressurised fluid (16) in the first brake circuit (11), and
a second valve element (42") movably received in a second valve housing (41"), the second valve element (42") cooperating in use with the second valve housing (41") to control a flow of pressurised fluid (16) in the second brake circuit (12);
the brake control (50) being operatively associated with the first and second valve elements (42', 42") and operable by a user to move both of the first and second valve elements (42', 42"), relative to the first and second valve housings (41', 41"),
from a first position (P1) in which the first and second valve elements (42', 42") are configured in use to cooperate with the first and second valve housings (41', 41") to relieve fluid pressure to release the first and second brakes (13, 14),
to a second position (P2) in which the first and second valve elements (42', 42") are configured in use to cooperate with the first and second valve housings (41', 41") to apply fluid pressure to apply the first and second brakes (13, 14);
the actuator assembly (60) being operable in use by the electrical control signal (21) to move the first valve element (42') from the first position (P1) to the second position (P2);
wherein the first valve element (42') includes a first abutment surface (52'), and
the second valve element (42") includes a second abutment surface (52"),
and the first valve element (42') is configured to move the second valve element (42") from the first position (P1) to the second position (P2) by abutment of the first abutment surface (52') against the second abutment surface (52") as the first valve element (42') moves from the first position (P1) to the second position (P2);
**characterised in that**
the actuator assembly (60) includes a first actuator (61) and an actuator control valve (62), the actuator control valve (62) being operable in use by the electrical control signal (21) to apply fluid pressure to the first actuator (61), the first actuator (61) being operable by said fluid pressure applied by the actuator control valve (62) to move the first valve element (42') from the first position (P1) to the second position (P2);
the first and second valve elements (42', 42") having proportional flow characteristics to apply fluid pressure, in use, to the respective first and second brakes (13, 14), proportional to a variable pressure applied to the brake control (50) by the user;
wherein the actuator control valve (62) is proportionally controllable in use by the electrical control signal (21) to apply said fluid pressure to the first actuator (61), to urge the first valve element (42') from the first position (P1) towards the second position (P2) with a force proportional to a variable parameter of the electrical control signal (21),
to cause the first and second valve elements (42', 42") to apply fluid pressure, in use, to the respective first and second brakes (13, 14) proportional to the variable parameter of the electrical control signal (21); and
the apparatus further includes:
a mount (31),
a plurality of fluid inlet and outlet ports (33), and
an electrical connector (34);
the valve assembly (40) being arranged in fluid communication with the fluid inlet and outlet ports (33);
the electrical connector (34) being arranged to communicate the electrical control signal (21) to the actuator assembly (60);
the valve assembly (40), the actuator assembly (60), the brake control (50), the fluid inlet and outlet ports (33), the electrical connector (34), and the mount (31) being connected together as a unitary assembly;
the mount (31) being fixable to the vehicle (1) to support the brake control (50) in a use position.

2. An apparatus according to claim 1, wherein the first and second valve housings (41', 41") are arranged in series relation in an axial direction of movement (D1) of the first and second valve elements (42', 42") between the first and second positions (P1, P2).

3. An apparatus according to claim 1, wherein the brake control (50) includes a foot pedal acting on the first valve element (42').

4. An apparatus according to claim 1, wherein the valve assembly (40) includes a second actuator (82') operable by fluid pressure to urge the first valve element (42') away from the second position (P2) towards the first position (P1).

5. An apparatus according to claim 4, wherein the valve assembly (40) includes:
a third actuator (82") operable by fluid pressure to urge the second valve element (42") away from the second position (P2) towards the first position (P1), and
a fourth actuator (83) operable by fluid pressure to urge the second valve element (42") away from the first position (P1) towards the second position (P2).

6. A vehicle (1) having a braking system (10) and an apparatus (30) according to claim 1 for controlling the braking system (10),
the braking system (10) including a source (15) of pressurised fluid (16) and a controller (20) for generating an electrical control signal (21),
the first and second valve elements (42', 42") being configured to control a flow of the pressurised fluid (16), respectively in first and second pressurised fluid brake circuits (11, 12) acting respectively on first and second brakes (13, 14) of the vehicle,
the actuator assembly (60) being operable by the electrical control signal (21) from the controller (20).

7. A vehicle according to claim 6, wherein the pressurised fluid (16) is provided from dual accumulators or tanks, each of said accumulators or tanks supplying a respective one of the pressurised fluid brake circuits (11, 12).

8. A method of controlling a braking system (10) in a vehicle (1), the braking system (10) including first and second pressurised fluid brake circuits (11, 12) acting respectively on first and second brakes (13, 14) of the vehicle (1), and a controller (20) for generating an electrical control signal (21);
the method including:
providing a valve assembly (40), a brake control (50), and an actuator assembly (60);
the valve assembly (40) including:
a first valve element (42') movably received in a first valve housing (41'), the first valve element (42') cooperating with the first valve housing (41') to control a flow of pressurised fluid (16) in the first brake circuit (11), and
a second valve element (42") movably received in a second valve housing (41"), the second valve element (42") cooperating with the second valve housing (41") to control a flow of pressurised fluid (16) in the second brake circuit (12);
arranging the brake control (50) in operative association with the first and second valve elements (42', 42") to be operable by a user to move both of the first and second valve elements (42', 42"), relative to the first and second valve housings (41', 41"),
from a first position (P1) in which the first and second valve elements (42', 42") are configured in use to cooperate with the first and second valve housings (41', 41") to relieve fluid pressure to release the first and second brakes (13, 14),
to a second position (P2) in which the first and second valve elements (42', 42") are configured in use to cooperate with the first and second valve housings (41', 41") to apply fluid pressure to apply the first and second brakes (13, 14);
arranging the actuator assembly (60) to be operable by the electrical control signal (21) to move the first valve element (42') from the first position (P1) to the second position (P2);
configuring the first valve element (42') to include a first abutment surface (52'), and
configuring the second valve element (42") to include a second abutment surface (52");
and configuring the first valve element (42') to move the second valve element (42") from the first position (P1) to the second position (P2) by abutment of the first abutment surface (52') against the second abutment surface (52") as the first valve element (42') moves from the first position (P1) to the second position (P2); and
**characterised in that**
the actuator assembly (60), a first actuator (61) and an actuator control valve (62), the actuator control valve (62) being operable in use by the electrical control signal (21) to apply fluid pressure to the first actuator (61), the first actuator (61) being operable by said fluid pressure applied by the actuator control valve (62) to move the first valve element (42') from the first position (P1) to the second position (P2); and
arranging the first and second valve elements (42', 42") to have proportional flow characteristics to apply fluid pressure, in use, to the respective first and second brakes (13, 14) proportional to the variable pressure applied to the brake control (50) by the user;
wherein arranging the actuator control valve (62) to be proportionally controllable in use by the electrical control signal (21) to apply said fluid pressure to the first actuator (61), to urge the first valve element (42') from the first position (P1) towards the second position (P2) with a force proportional to a variable parameter of the electrical control signal (21),
to cause the first and second valve elements (42', 42") to apply fluid pressure, in use, to the respective first and second brakes (13, 14), proportional to the variable parameter of the electrical control signal (21);
and further including, in the apparatus:
a mount (31),
a plurality of fluid inlet and outlet ports (33), and
an electrical connector (34);
arranging the valve assembly (40) in fluid communication with the fluid inlet and outlet ports (33);
arranging the electrical connector (34) to communicate the electrical control signal (21) to the actuator assembly (60);
connecting together the valve assembly (40), the actuator assembly (60), the brake control (50), the fluid inlet and outlet ports (33), the electrical connector (34), and the mount (31) as a unitary assembly; and
arranging the mount (31) to be fixable to the vehicle (1) to support the brake control (50) in a use position.

## Patentansprüche

1. Vorrichtung (30) zum Steuern eines Bremssystems (10) in einem Fahrzeug (1), wobei das Bremssystem (10) eine erste und eine zweite druckbeaufschlagte Fluid-Bremsschaltung (11, 12), die jeweils auf eine erste und eine zweite Bremse (13, 14) des Fahrzeugs wirken, und eine Steuerung (20) zum Erzeugen eines elektrischen Steuersignals (21) einschließt;
wobei die Vorrichtung einschließt:
eine Ventilanordnung (40),
eine Bremssteuerung (50), und
eine Aktuatoranordnung (60);
wobei die Ventilanordnung (40) einschließt:
ein erstes Ventilelement (42'), das in einem ersten Ventilgehäuse (41') beweglich aufgenommen ist, wobei das erste Ventilelement (42') bei Verwendung mit dem ersten Ventilgehäuse (41') zusammenwirkt, um einen Strom von druckbeaufschlagtem Fluid (16) in der ersten Bremsschaltung (11) zu steuern, und
ein zweites Ventilelement (42"), das in einem zweiten Ventilgehäuse (41") beweglich aufgenommen wird, wobei das zweite Ventilelement (42") bei Verwendung mit dem zweiten Ventilgehäuse (41") zusammenwirkt, um einen Strom von druckbeaufschlagtem Fluid (16) in der zweiten Bremsschaltung (12) zu steuern;
wobei die Bremssteuerung (50) dem ersten und dem zweiten Ventilelement (42', 42") operativ zugeordnet ist und durch einen Benutzer betreibbar ist, um sowohl das erste als auch das zweite Ventilelement (42', 42") relativ zu dem ersten und dem zweiten Ventilgehäuse (41', 41") zu bewegen,
aus einer ersten Position (P1), in der das erste und das zweite Ventilelement (42', 42") bei Verwendung so konfiguriert sind, dass sie mit dem ersten und dem zweiten Ventilgehäuse (41', 41") zusammenwirken, um Fluiddruck zu entlasten und die erste und die zweite Bremse (13, 14) zu lösen,
in eine zweite Position (P2), in der das erste und das zweite Ventilelement (42', 42") bei Verwendung so konfiguriert sind, dass sie mit dem ersten und dem zweiten Ventilgehäuse (41', 41") zusammenwirken, um Fluiddruck anzuwenden, um die erste und die zweite Bremse (13, 14) zu betätigen;
wobei die Aktuatoranordnung (60) bei Verwendung durch das elektrische Steuersignal (21) betreibbar ist, um das erste Ventilelement (42') aus der ersten Position (P1) in die zweite Position (P2) zu bewegen;
wobei das erste Ventilelement (42') eine erste Anschlagfläche (52') einschließt, und
das zweite Ventilelement (42") eine zweite Anschlagfläche (52") einschließt,
und das erste Ventilelement (42') so konfiguriert ist, dass es das zweite Ventilelement (42") aus der ersten Position (P1) in die zweite Position (P2) durch Anschlagen der ersten Anschlagfläche (52') gegen die zweite Anschlagfläche (52") bewegt, wenn sich das erste Ventilelement (42') aus der ersten Position (P1) in die zweite Position (P2) bewegt;
**dadurch gekennzeichnet, dass**
die Aktuatoranordnung (60) einen ersten Aktuator (61) und ein Aktuator-Steuerventil (62) einschließt, wobei das Aktuator-Steuerventil (62) bei Verwendung durch das elektrische Steuersignal (21) betreibbar ist, um Fluiddruck auf den ersten Aktuator (61) anzuwenden, wobei der erste Aktuator (61) durch den Fluiddruck, der durch das Aktuator-Steuerventil (62) angewendet wird, betreibbar ist, um das erste Ventilelement (42') aus der ersten Position (P1) in die zweite Position (P2) zu bewegen;
das erste und das zweite Ventilelement (42', 42") proportionale Stromeigenschaften aufweisen, um bei Verwendung Fluiddruck auf die jeweilige erste und zweite Bremse (13, 14) anzuwenden, der proportional zu einem variablen Druck ist, der durch den Benutzer auf die Bremssteuerung (50) angewendet wird;
wobei
das Aktuator-Steuerventil (62) bei Verwendung durch das elektrische Steuersignal (21) proportional steuerbar ist, um den Fluiddruck auf den ersten Aktuator (61) anzuwenden, um das erste Ventilelement (42') mit einer Kraft, die proportional zu einem variablen Parameter des elektrischen Steuersignals (21) ist, aus der ersten Position (P1) in Richtung der zweiten Position (P2) zu drängen,
um das erste und das zweite Ventilelement (42', 42") zu veranlassen, bei Verwendung Fluiddruck auf die jeweilige erste und zweite Bremse (13, 14) anzuwenden, der proportional zu dem variablen Parameter des elektrischen Steuersignals (21) ist; und
die Vorrichtung ferner einschließt:
eine Halterung (31),
eine Vielzahl von Fluideinlass- und -auslassöffnungen (33), und
einen elektrischen Verbinder (34);
wobei die Ventilanordnung (40) in Fluidkommunikation mit den Fluideinlass- und -auslassöffnungen (33) eingerichtet ist;
wobei der elektrische Verbinder (34) eingerichtet ist, um das elektrische Steuersignal (21) an die Aktuatoranordnung (60) zu kommunizieren;
wobei die Ventilanordnung (40), die Aktuatoranordnung (60), die Bremssteuerung (50), die Fluideinlass- und -auslassöffnungen (33), der elektrische Verbinder (34) und die Halterung (31) als eine einheitliche Anordnung miteinander verbunden sind;
wobei die Halterung (31) an dem Fahrzeug (1) anbringbar ist, um die Bremssteuerung (50) in einer Verwendungsposition zu stützen.

2. Vorrichtung nach Anspruch 1, wobei das erste und das zweite Ventilgehäuse (41', 41") in Reihe in einer axialen Bewegungsrichtung (D1) des ersten und des zweiten Ventilelements (42', 42") zwischen der ersten und der zweiten Position (P1, P2) eingerichtet sind.

3. Vorrichtung nach Anspruch 1, wobei die Bremssteuerung (50) ein Fußpedal einschließt, das auf das erste Ventilelement (42') wirkt.

4. Vorrichtung nach Anspruch 1, wobei die Ventilanordnung (40) einen zweiten Aktuator (82') einschließt, der durch Fluiddruck betreibbar ist, um das erste Ventilelement (42') von der zweiten Position (P2) weg in Richtung der ersten Position (P1) zu drängen.

5. Vorrichtung nach Anspruch 4, wobei die Ventilanordnung (40) einschließt:
einen dritten Aktuator (82"), der durch Fluiddruck betreibbar ist, um das zweite Ventilelement (42") von der zweiten Position (P2) weg in Richtung der ersten Position (P1) zu drängen, und
einen vierten Aktuator (83), der durch Fluiddruck betreibbar ist, um das zweite Ventilelement (42") von der ersten Position (P1) weg in Richtung der zweiten Position (P2) zu drängen.

6. Fahrzeug (1), das ein Bremssystem (10) und eine Vorrichtung (30) nach Anspruch 1 zum Steuern des Bremssystems (10) aufweist,
wobei das Bremssystem (10) eine Quelle (15) von druckbeaufschlagtem Fluid (16) und eine Steuerung (20) zum Erzeugen eines elektrischen Steuersignals (21) einschließt,
wobei das erste und das zweite Ventilelement (42', 42") so konfiguriert sind, dass sie einen Strom des druckbeaufschlagten Fluids (16) jeweils in einer ersten und einer zweiten druckbeaufschlagten Fluid-Bremsschaltung (11, 12) steuern, die jeweils auf eine erste und eine zweite Bremse (13, 14) des Fahrzeugs wirken,
wobei die Aktuatoranordnung (60) durch das elektrische Steuersignal (21) von der Steuerung (20) betreibbar ist.

7. Fahrzeug nach Anspruch 6, wobei das druckbeaufschlagte Fluid (16) aus zwei Akkumulatoren oder Tanks bereitgestellt wird, wobei jeder der Akkumulatoren oder Tanks jeweils eine der druckbeaufschlagten Fluid-Bremsschaltungen (11, 12) versorgt.

8. Verfahren zum Steuern eines Bremssystems (10) in einem Fahrzeug (1), wobei das Bremssystem (10) eine erste und eine zweite druckbeaufschlagte Fluid-Bremsschaltung (11, 12), die jeweils auf eine erste und eine zweite Bremse (13, 14) des Fahrzeugs (1) wirken, und eine Steuerung (20) zum Erzeugen eines elektrischen Steuersignals (21) einschließt;
wobei das Verfahren einschließt:
Bereitstellen einer Ventilanordnung (40), einer Bremssteuerung (50) und einer Aktuatoranordnung (60);
wobei die Ventilanordnung (40) einschließt:
ein erstes Ventilelement (42'), das in einem ersten Ventilgehäuse (41') beweglich aufgenommen ist, wobei das erste Ventilelement (42') mit dem ersten Ventilgehäuse (41') zusammenwirkt, um einen Strom von druckbeaufschlagtem Fluid (16) in der ersten Bremsschaltung (11) zu steuern, und
ein zweites Ventilelement (42"), das in einem zweiten Ventilgehäuse (41") beweglich aufgenommen wird, wobei das zweite Ventilelement (42") mit dem zweiten Ventilgehäuse (41") zusammenwirkt, um einen Strom von druckbeaufschlagtem Fluid (16) in der zweiten Bremsschaltung (12) zu steuern;
Anordnen der Bremssteuerung (50) in operativer Zuordnung zu dem ersten und dem zweiten Ventilelement (42', 42"), um durch einen Benutzer betreibbar zu sein, um sowohl das erste als auch das zweite Ventilelement (42', 42") relativ zu dem ersten und dem zweiten Ventilgehäuse (41', 41") zu bewegen,
aus einer ersten Position (P1), in der das erste und das zweite Ventilelement (42', 42") bei Verwendung so konfiguriert sind, dass sie mit dem ersten und dem zweiten Ventilgehäuse (41', 41") zusammenwirken, um Fluiddruck zu entlasten und die erste und die zweite Bremse (13, 14) zu lösen,
in eine zweite Position (P2), in der das erste und das zweite Ventilelement (42', 42") bei Verwendung so konfiguriert sind, dass sie mit dem ersten und dem zweiten Ventilgehäuse (41', 41") zusammenwirken, um Fluiddruck anzuwenden, um die erste und die zweite Bremse (13, 14) zu betätigen;
Anordnen der Aktuatoranordnung (60), um durch das elektrische Steuersignal (21) betreibbar zu sein, um das erste Ventilelement (42') aus der ersten Position (P1) in die zweite Position (P2) zu bewegen;
Konfigurieren des ersten Ventilelements (42'), um eine erste Anschlagfläche (52') einzuschließen, und
Konfigurieren des zweiten Ventilelements (42"), um eine zweite Anschlagfläche (52") einzuschließen;
und Konfigurieren des ersten Ventilelements (42'), um das zweite Ventilelement (42") aus der ersten Position (P1) in die zweite Position (P2) durch Anschlagen der ersten Anschlagfläche (52') gegen die zweite Anschlagfläche (52") zu bewegen, wenn sich das erste Ventilelement (42') aus der ersten Position (P1) in die zweite Position (P2) bewegt; und
**dadurch gekennzeichnet, dass**
die Aktuatoranordnung (60), ein erster Aktuator (61) und ein Aktuator-Steuerventil (62), wobei das Aktuator-Steuerventil (62) bei Verwendung durch das elektrische Steuersignal (21) betreibbar ist, um Fluiddruck auf den ersten Aktuator (61) anzuwenden, wobei der erste Aktuator (61) durch den Fluiddruck, der durch das Aktuator-Steuerventil (62) angewendet wird, betreibbar ist, um das erste Ventilelement (42') aus der ersten Position (P1) in die zweite Position (P2) zu bewegen; und
Anordnen des ersten und des zweiten Ventilelements (42', 42"), um proportionale Strömungseigenschaften aufzuweisen, um bei Verwendung Fluiddruck auf die jeweilige erste und zweite Bremse (13, 14) anzuwenden, der proportional zu dem variablen Druck ist, der durch den Benutzer auf die Bremssteuerung (50) angewendet wird;
wobei
das Anordnen des Aktuator-Steuerventils (62), um bei Verwendung durch das elektrische Steuersignal (21) proportional steuerbar zu sein, um den Fluiddruck auf den ersten Aktuator (61) anzuwenden, um das erste Ventilelement (42') mit einer Kraft, die proportional zu einem variablen Parameter des elektrischen Steuersignals (21) ist, aus der ersten Position (P1) in Richtung der zweiten Position (P2) zu drängen,
um das erste und das zweite Ventilelement (42', 42") zu veranlassen, bei Verwendung Fluiddruck auf die jeweilige erste und zweite Bremse (13, 14) anzuwenden, der proportional zu dem variablen Parameter des elektrischen Steuersignals (21) ist;
und ferner in der Vorrichtung eingeschlossen:
eine Halterung (31),
eine Vielzahl von Fluideinlass- und -auslassöffnungen (33), und
einen elektrischen Verbinder (34);
Anordnen der Ventilanordnung (40) in Fluidkommunikation mit den Fluideinlass- und -auslassöffnungen (33);
Anordnen des elektrischen Verbinders (34), um das elektrische Steuersignal (21) an die Aktuatoranordnung (60) zu kommunizieren;
miteinander Verbinden der Ventilanordnung (40), der Aktuatoranordnung (60), der Bremssteuerung (50), der Fluideinlass- und -auslassöffnungen (33), des elektrischen Verbinders (34) und der Halterung (31) als eine einheitliche Anordnung; und
Anordnen der Halterung (31), um an dem Fahrzeug (1) anbringbar zu sein, um die Bremssteuerung (50) in einer Verwendungsposition zu stützen.

## Revendications

1. Appareil (30) pour commander un système de freinage (10) dans un véhicule (1), le système de freinage (10) incluant des premier et deuxième circuits de frein à fluide sous pression (11, 12) agissant respectivement sur des premier et deuxième freins (13, 14) du véhicule, et un contrôleur (20) pour générer un signal de commande électrique (21) ;
l'appareil incluant :
un ensemble soupape (40),
une commande de frein (50), et
un ensemble actionneur (60) ;
l'ensemble soupape (40) incluant :
un premier élément de soupape (42') reçu de manière mobile dans un premier logement de soupape (41'), le premier élément de soupape (42') coopérant en utilisation avec le premier logement de soupape (41') pour commander un écoulement de fluide sous pression (16) dans le premier circuit de frein (11), et
un deuxième élément de soupape (42") reçu de manière mobile dans un deuxième logement de soupape (41"), le deuxième élément de soupape (42") coopérant en utilisation avec le deuxième logement de soupape (41") pour commander un écoulement de fluide sous pression (16) dans le deuxième circuit de frein (12) ;
la commande de frein (50) étant associée fonctionnellement aux premier et deuxième éléments de soupape (42', 42") et pouvant être actionnée par un utilisateur pour déplacer à la fois le premier et le deuxième éléments de soupape (42', 42") par rapport aux premier et deuxième logements de soupape (41', 41"),
à partir d'une première position (P1) dans laquelle les premier et deuxième éléments de soupape (42', 42") sont configurés en utilisation pour coopérer avec les premier et deuxième logements de soupape (41', 41") pour relâcher la pression de fluide afin de desserrer les premier et deuxième freins (13, 14),
à une deuxième position (P2) dans laquelle les premier et deuxième éléments de soupape (42', 42") sont configurés en utilisation pour coopérer avec les premier et deuxième logements de soupape (41', 41") pour appliquer une pression de fluide pour appliquer les premier et deuxième freins (13, 14) ;
l'ensemble actionneur (60) pouvant être actionné en utilisation par le signal de commande électrique (21) pour déplacer le premier élément de soupape (42') de la première position (P1) à la deuxième position (P2) ;
dans lequel le premier élément de soupape (42') inclut une première surface de butée (52'), et
le deuxième élément de soupape (42") inclut une deuxième surface de butée (52"),
et le premier élément de soupape (42') est configuré pour déplacer le deuxième élément de soupape (42") de la première position (P1) à la deuxième position (P2) par la mise en butée de la première surface de butée (52') contre la deuxième surface de butée (52") alors que le premier élément de soupape (42') se déplace de la première position (P1) à la deuxième position (P2) ;
**caractérisé en ce que**
l'ensemble actionneur (60) inclut un premier actionneur (61) et une soupape de commande d'actionneur (62), la soupape de commande d'actionneur (62) pouvant être actionnée en utilisation par le signal de commande électrique (21) pour appliquer une pression de fluide au premier actionneur (61), le premier actionneur (61) pouvant être actionné par ladite pression de fluide appliquée par la soupape de commande d'actionneur (62) pour déplacer le premier élément de soupape (42') de la première position (P1) à la deuxième position (P2) ;
les premier et deuxième éléments de soupape (42', 42") ayant des caractéristiques d'écoulement proportionnel pour appliquer une pression de fluide, en utilisation, aux premier et deuxième freins respectifs (13, 14), proportionnelle à une pression variable appliquée à la commande de frein (50) par l'utilisateur ;
dans lequel
la soupape de commande d'actionneur (62) peut être commandée proportionnellement en utilisation par le signal de commande électrique (21) pour appliquer ladite pression de fluide au premier actionneur (61), pour pousser le premier élément de soupape (42') à partir de la première position (P1) vers la deuxième position (P2) avec une force proportionnelle à un paramètre variable du signal de commande électrique (21),
pour amener les premier et deuxième éléments de soupape (42', 42") à appliquer une pression de fluide, en utilisation, aux premier et deuxième freins respectifs (13, 14), proportionnelle au paramètre variable du signal de commande électrique (21) ; et
l'appareil inclut en outre :
une monture (31),
une pluralité d'orifices d'entrée et de sortie de fluide (33), et
un connecteur électrique (34) ;
l'ensemble soupape (40) étant agencé en communication fluidique avec les orifices d'entrée et de sortie de fluide (33) ;
le connecteur électrique (34) étant agencé pour communiquer le signal de commande électrique (21) à l'ensemble actionneur (60) ;
l'ensemble soupape (40), l'ensemble actionneur (60), la commande de frein (50), les orifices d'entrée et de sortie de fluide (33), le connecteur électrique (34), et la monture (31) étant connectés ensemble en tant qu'ensemble unitaire ;
la monture (31) pouvant être fixée au véhicule (1) pour supporter la commande de frein (50) dans une position d'utilisation.

2. Appareil selon la revendication 1, dans lequel les premier et deuxième logements de soupape (41', 41") sont agencés dans une relation en série dans une direction de déplacement axiale (D1) des premier et deuxième éléments de soupape (42', 42") entre les première et deuxième positions (P1, P2).

3. Appareil selon la revendication 1, dans lequel la commande de frein (50) inclut une pédale agissant sur le premier élément de soupape (42').

4. Appareil selon la revendication 1, dans lequel l'ensemble soupape (40) inclut un deuxième actionneur (82') pouvant être actionné par une pression de fluide pour pousser le premier élément de soupape (42') de la deuxième position (P2) vers la première position (P1).

5. Appareil selon la revendication 4, dans lequel l'ensemble soupape (40) inclut :
un troisième actionneur (82") pouvant être actionné par une pression de fluide pour pousser le deuxième élément de soupape (42") de la deuxième position (P2) vers la première position (P1), et
un quatrième actionneur (83) pouvant être actionné par une pression de fluide pour pousser le deuxième élément de soupape (42") de la première position (P1) vers la deuxième position (P2).

6. Véhicule (1) ayant un système de freinage (10) et un appareil (30) selon la revendication 1 pour commander le système de freinage (10),
le système de freinage (10) incluant une source (15) de fluide sous pression (16) et un contrôleur (20) pour générer un signal de commande électrique (21),
les premier et deuxième éléments de soupape (42', 42") étant configurés pour commander un écoulement du fluide sous pression (16), respectivement dans des premier et deuxième circuits de frein à fluide sous pression (11, 12) agissant respectivement sur des premier et deuxième freins (13, 14) du véhicule,
l'ensemble actionneur (60) pouvant être actionné par le signal de commande électrique (21) provenant du contrôleur (20).

7. Véhicule selon la revendication 6, dans lequel le fluide sous pression (16) est fourni par deux accumulateurs ou réservoirs, chacun desdits accumulateurs ou réservoirs alimentant un circuit respectif des circuits de frein à fluide sous pression (11, 12).

8. Procédé de commande d'un système de freinage (10) dans un véhicule (1), le système de freinage (10) incluant des premier et deuxième circuits de frein à fluide sous pression (11, 12) agissant respectivement sur des premier et deuxième freins (13, 14) du véhicule (1), et un contrôleur (20) pour générer un signal de commande électrique (21) ;
le procédé incluant :
la fourniture d'un ensemble soupape (40), d'une commande de frein (50), et d'un ensemble actionneur (60) ;
l'ensemble soupape (40) incluant :
un premier élément de soupape (42') reçu de manière mobile dans un premier logement de soupape (41'), le premier élément de soupape (42') coopérant avec le premier logement de soupape (41') pour commander un écoulement de fluide sous pression (16) dans le premier circuit de frein (11), et
un deuxième élément de soupape (42") reçu de manière mobile dans un deuxième logement de soupape (41"), le deuxième élément de soupape (42") coopérant avec le deuxième logement de soupape (41") pour commander un écoulement de fluide sous pression (16) dans le deuxième circuit de frein (12) ;
l'agencement de la commande de frein (50) en association fonctionnelle avec les premier et deuxième éléments de soupape (42', 42") pour qu'elle puisse être actionnée par un utilisateur pour déplacer à la fois le premier et le deuxième éléments de soupape (42', 42"), par rapport aux premier et deuxième logements de soupape (41', 41"),
à partir d'une première position (P1) dans laquelle les premier et deuxième éléments de soupape (42', 42") sont configurés en utilisation pour coopérer avec les premier et deuxième logements de soupape (41', 41") pour relâcher la pression de fluide afin de desserrer les premier et deuxième freins (13, 14),
à une deuxième position (P2) dans laquelle les premier et deuxième éléments de soupape (42', 42") sont configurés en utilisation pour coopérer avec les premier et deuxième logements de soupape (41', 41") pour appliquer une pression de fluide pour appliquer les premier et deuxième freins (13, 14) ;
l'agencement de l'ensemble actionneur (60) pour qu'il puisse être actionné par le signal de commande électrique (21) pour déplacer le premier élément de soupape (42') de la première position (P1) à la deuxième position (P2) ;
la configuration du premier élément de soupape (42') pour inclure une première surface de butée (52'), et
la configuration du deuxième élément de soupape (42") pour inclure une deuxième surface de butée (52") ;
et la configuration du premier élément de soupape (42') pour déplacer le deuxième élément de soupape (42") de la première position (P1) à la deuxième position (P2) par la mise en butée de la première surface de butée (52') contre la deuxième surface de butée (52") alors que le premier élément de soupape (42') se déplace de la première position (P1) à la deuxième position (P2) ; et
**caractérisé en ce que**
l'ensemble actionneur (60), un premier actionneur (61) et une soupape de commande d'actionneur (62), la soupape de commande d'actionneur (62) pouvant être actionnée en utilisation par le signal de commande électrique (21) pour appliquer une pression de fluide au premier actionneur (61), le premier actionneur (61) pouvant être actionné par ladite pression de fluide appliquée par la soupape de commande d'actionneur (62) pour déplacer le premier élément de soupape (42') de la première position (P1) à la deuxième position (P2) ; et
l'agencement des premier et deuxième éléments de soupape (42', 42") pour avoir des caractéristiques d'écoulement proportionnel pour appliquer une pression de fluide, en utilisation, aux premier et deuxième freins respectifs (13, 14), proportionnelle à la pression variable appliquée à la commande de frein (50) par l'utilisateur ;
dans lequel
l'agencement de la soupape de commande d'actionneur (62) pour qu'elle puisse être commandée proportionnellement en utilisation par le signal de commande électrique (21) pour appliquer ladite pression de fluide au premier actionneur (61), pour pousser le premier élément de soupape (42') de la première position (P1) vers la deuxième position (P2) avec une force proportionnelle à un paramètre variable du signal de commande électrique (21),
pour amener les premier et deuxième éléments de soupape (42', 42") à appliquer une pression de fluide, en utilisation, aux premier et deuxième freins respectifs (13, 14), proportionnellement au paramètre variable du signal de commande électrique (21) ;
et incluant en outre, dans l'appareil :
une monture (31),
une pluralité d'orifices d'entrée et de sortie de fluide (33), et
un connecteur électrique (34) ;
l'agencement de l'ensemble soupape (40) en communication fluidique avec les orifices d'entrée et de sortie de fluide (33) ;
l'agencement du connecteur électrique (34) pour communiquer le signal de commande électrique (21) à l'ensemble actionneur (60) ;
la connexion ensemble de l'ensemble soupape (40), l'ensemble actionneur (60), la commande de frein (50), les orifices d'entrée et de sortie de fluide (33), le connecteur électrique (34), et la monture (31) en tant qu'ensemble unitaire ; et
l'agencement de la monture (31) pour qu'elle puisse être fixée au véhicule (1) afin de supporter la commande de frein (50) dans une position d'utilisation.
